# EUROPEAN PATENT APPLICATION

(11) **EP 4 318 731 A1**
(43) Date of publication of application: **07.02.2024**
(21) Application number: 22916674.9
(22) Date of filing: 26.12.2022
(51) Int. Cl.: H01M 10/42, A62C 3/16, H01M 50/251, H01M 50/249

(54) **BATTERY MODULE, BATTERY PACK COMPRISING BATTERY MODULE, AND ENERGY STORAGE SYSTEM AND VEHICLE COMPRISING BATTERY PACK**

(30) Priority: 27.12.2021 KR 20210188505
(71) Applicant: LG ENERGY SOLUTION, LTD., Seoul 07335 (KR)
(72) Inventor: KIM, Seung-Hyun, Daejeon 34122 (KR); OH, Young-Hoo, Daejeon 34122 (KR); OK, Seung-Min, Daejeon 34122 (KR); JO, Sang-Hyun, Daejeon 34122 (KR); CHO, Young-Bum, Daejeon 34122 (KR); HONG, Sung-Goen, Daejeon 34122 (KR)
(74) Representative: Plasseraud IP
(86) International application number: PCT/KR2022/021337
(87) International publication number: WO 2023/128533

(57) **Abstract**

A battery module according to an embodiment of the present disclosure includes at least one battery cell, a module case accommodating the at least one battery cell, at least one leakage prevention pocket provided in the module case to prevent leakage of flame or spark in case of an abnormal situation of the at least one battery cell, and a fire extinguishing agent injection unit provided to the at least one leakage prevention pocket and configured to inject a fire extinguishing agent into the module case in the event of the abnormal situation.

## Description

### TECHNICAL FIELD

The present disclosure relates to a battery module, a battery pack including the battery module, and an energy storage system and a vehicle including the battery pack.

The present application claims priority to Korean Patent Application No. 10-2021-0188505 filed on December 27, 2021 in the Republic of Korea, the disclosures of which are incorporated herein by reference.

### BACKGROUND ART

Secondary batteries have high applicability according to product groups and electrical characteristics such as high energy density, and thus, are commonly applied not only to mobile devices but also to electric vehicles (EVs) or hybrid vehicles (HEVs) driven by electric power sources. Because secondary batteries may radically reduce the use of fossil fuel and do not generate any by-products that come with energy consumption, the secondary batteries are gaining attention as a new alternative energy source for improving eco-friendliness and energy efficiency.

Types of secondary batteries that are currently widely used include lithium-ion batteries, lithium polymer batteries, nickel cadmium batteries, nickel hydride batteries, and nickel zinc batteries. An operating voltage of a unit secondary battery cell, that is, a unit battery cell, ranges from about 2.5 V to about 4.5 V. Accordingly, when a higher output voltage is required, a battery pack may be configured by connecting a plurality of battery cells in series. Also, a battery pack may be configured by connecting a plurality of battery cells in parallel according to charge/discharge capacity required for the battery pack. Accordingly, the number of battery cells included in a battery pack may be set in various ways according to a required output voltage and/or charge/discharge capacity.

Meanwhile, when a battery pack is configured by connecting a plurality of battery cells in series/parallel, in general, a battery module including at least one battery cell is first configured, and other components are added using the at least one battery module to configure a battery pack or a battery rack.

A conventional battery module generally includes a plurality of battery cells stacked with each other and a module housing accommodating the plurality of battery cells. In the case of such a conventional battery module, when overheating occurs in a specific battery cell among the plurality of battery cells due to an abnormal situation, the heat generated in the overheated battery cell is transferred to adjacent battery cells as it is to generate thermal runaway, resulting in greater risks such as explosion of the battery module.

Therefore, it is required to find a way to provide a battery module capable of preventing thermal runaway when an abnormal situation occurs in a battery cell, a battery pack including the battery module, and an energy storage system and a vehicle including the battery pack.

### DISCLOSURE

### Technical Problem

The present disclosure is designed to solve the problems of the related art, and therefore the present disclosure is directed to providing a battery module capable of preventing thermal runaway when an abnormal situation occurs in a battery cell, a battery pack including the battery module, and an energy storage system and a vehicle including the battery pack.

### Technical Solution

In one aspect of the present disclosure, there is provided a battery module, comprising: at least one battery cell; a module case accommodating the at least one battery cell; at least one leakage prevention pocket provided in the module case to prevent leakage of flame or spark in case of an abnormal situation of the at least one battery cell; and a fire extinguishing agent injection unit provided to the at least one leakage prevention pocket and configured to inject a fire extinguishing agent into the module case in the event of the abnormal situation.

The leakage prevention pocket may be provided in plurality, and the plurality of leakage prevention pockets may be disposed with the at least one battery cell interposed therebetween.

The plurality of leakage prevention pockets may be provided on edge portions of both sides of the module case.

The plurality of leakage prevention pockets may have a predetermined space capable of accommodating the flame or spark.

The plurality of leakage prevention pockets may be provided in a direction facing the moving direction of the flame or spark in the event of the abnormal situation.

The fire extinguishing agent injection unit may be provided to at least one of the plurality of leakage prevention pockets.

The fire extinguishing agent injection unit may be provided to pass through at least one of the plurality of leakage prevention pockets.

The fire extinguishing agent injection unit may include an injection unit body containing the fire extinguishing agent and provided outside the module case; and an injection nozzle connected to the injection unit body and configured to pass through at least one of the plurality of leakage prevention pockets.

The injection nozzle may be disposed to face the at least one battery cell within the plurality of leakage prevention pockets and be configured to inject the fire extinguishing agent toward the at least one battery cell in the event of the abnormal situation.

The fire extinguishing agent injection unit may be provided in plurality, and the plurality of fire extinguishing agent injection units may be disposed to face each other with the at least one battery cell interposed therebetween.

The fire extinguishing agent may be provided as a fire extinguishing liquid or a fire extinguishing gas.

In addition, the present disclosure provides a battery pack, comprising: at least one battery module according to the above embodiments; and a pack case accommodating the at least one battery module.

In addition, the present disclosure provides an energy storage system, comprising at least one battery pack according to the above embodiment.

In addition, the present disclosure provides a vehicle, comprising at least one battery pack according to the above embodiment.

### Advantageous Effects

According to various embodiments as described above, there may be provided a battery module capable of preventing thermal runaway when an abnormal situation occurs in a battery cell, a battery pack including the battery module, and an energy storage system and a vehicle including the battery pack.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for explaining a battery module according to an embodiment of the present disclosure.
FIG. 2 is an exploded perspective view of the battery module of FIG. 1.
FIG. 3 is a cross-sectional view of the battery module of FIG. 1.
FIG. 4 is an enlarged view of a main part of the battery module of FIG. 3.
FIGS. 5 and 6 are diagrams for explaining a thermal runaway prevention mechanism of the battery module of FIG. 1 when an abnormal situation occurs.
FIG. 7 is a diagram for explaining a battery module according to another embodiment of the present disclosure.
FIG. 8 is a diagram for explaining a battery pack according to an embodiment of the present disclosure.

### BEST MODE

The present disclosure will now be described more fully with reference to the accompanying drawings, in which exemplary embodiments of the present disclosure are shown. These embodiments are provided so that the present disclosure will be thorough and complete, and will fully convey the concept of the present disclosure to one of ordinary skill in the art, and the present disclosure may be embodied in many different forms and should not be construed as being limited to the embodiments set forth herein. In addition, in order to help the understanding of the present disclosure, the accompanying drawings are not drawn to scale, but dimensions of some components may be exaggerated.

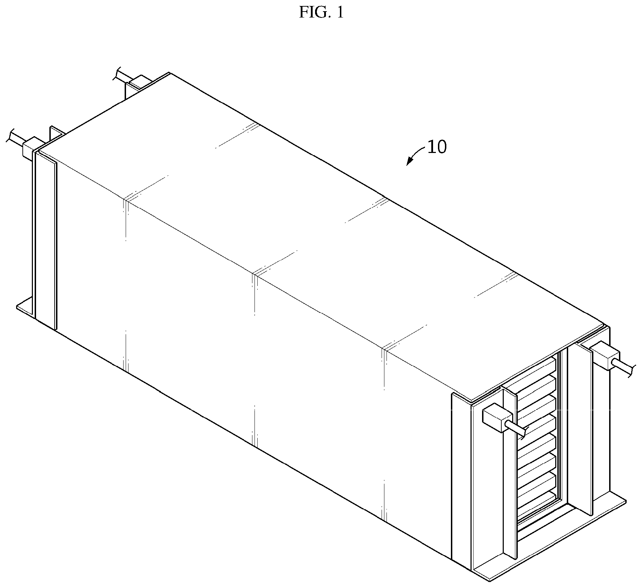

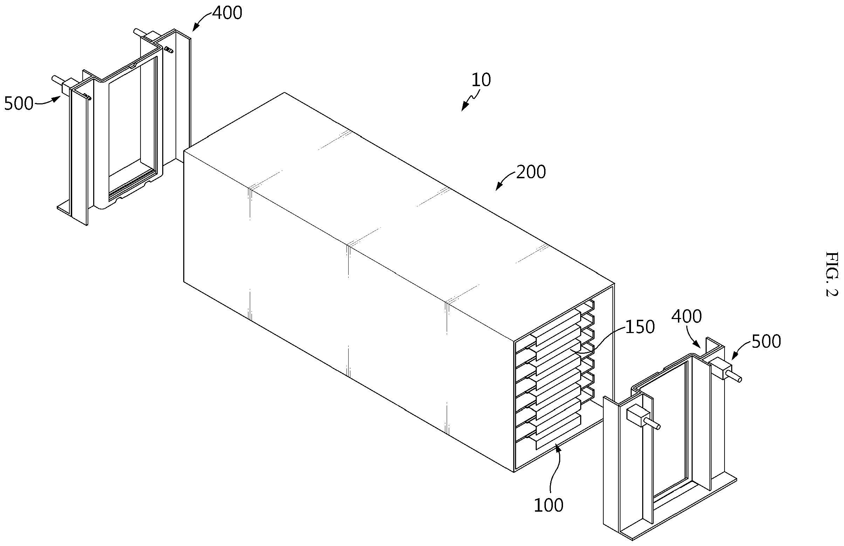

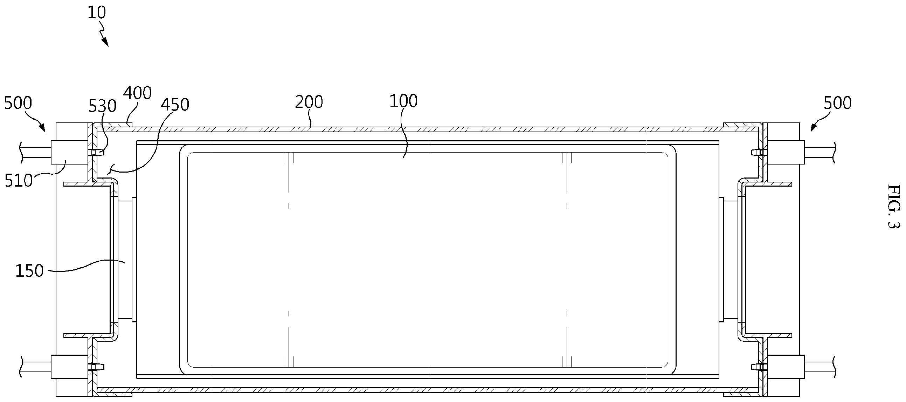

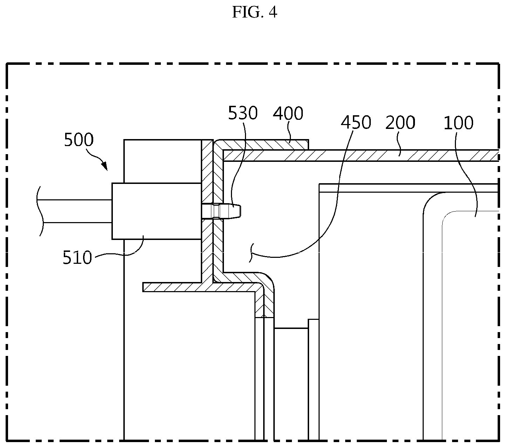

FIG. 1 is a diagram for explaining a battery module according to an embodiment of the present disclosure, FIG. 2 is an exploded perspective view of the battery module of FIG. 1, FIG. 3 is a cross-sectional view of the battery module of FIG. 1, and FIG. 4 is an enlarged view of a main part of the battery module of FIG. 3.

Referring to FIGS. 1 to 4, the battery module 10 may include a battery cell 100, a module case 200, a leakage prevention pocket 400, and a fire extinguishing agent injection unit 500.

The battery cell 100 is a secondary battery, and may be provided as a pouch-type secondary battery, a prismatic secondary battery, or a cylindrical secondary battery. Hereinafter, in the present embodiment, the battery cell 100 will be described as being provided as a pouch-type secondary battery.

The battery cell 100 may include an electrode assembly, a battery case accommodating the electrode assembly, and an electrode lead 150 protruding out of the battery case and connected to the electrode assembly. The electrode lead 150 senses the voltage of the battery cell 100 and may be coupled with a bus bar assembly (not shown) mounted to the module case 200 described later.

The battery cell 100 may be provided in at least one or in plurality. Hereinafter, in this embodiment, the battery cell 100 is limitedly described as being provided in plurality in a stacked manner so as to be electrically connected to each other.

The module case 200 may accommodate the at least one battery cell 100, or the plurality of battery cells 100 in this embodiment. To this end, an accommodation space capable of accommodating the plurality of battery cells 100 may be provided in the module case 200.

The leakage prevention pocket 400 is provided within the module case 200, and may prevent leakage of spark or flame F in an abnormal situation of the at least one battery cell 100.

The leakage prevention pocket 400 may be provided in plurality. The plurality of leakage prevention pockets 400 may be disposed with the at least one battery cell 100 interposed therebetween.

The plurality of leakage prevention pockets 400 may be provided on edge portions of both sides of the module case 200. The plurality of leakage prevention pockets 400 may be provided in a direction facing the moving direction of the flame or spark F in the abnormal situation.

The plurality of leakage prevention pockets 400 may have a predetermined space 450 capable of accommodating the flame or spark F. The predetermined space 450 may be provided in a predetermined shape capable of accommodating the flame or spark F. For example, the predetermined space 450 may be convexly formed in the edge area of the module case 200 to form a predetermined space inside.

The fire extinguishing agent injection unit 500 is provided to the at least one leakage prevention pocket 400, and in the event of an abnormal situation, may inject the fire extinguishing agent 550 into the module case 200. Specifically, the fire extinguishing agent injection unit 500 may be provided to at least one of the plurality of leakage prevention pockets 400.

The fire extinguishing agent injection unit 500 may be provided to pass through at least one of the plurality of leakage prevention pockets 400 and be disposed in a space 450 of the leakage prevention pocket 400 through which the fire extinguishing agent injection unit 500 passes.

The fire extinguishing agent injection unit 500 may be provided in plurality. The plurality of fire extinguishing agent injection units 500 may be disposed to face each other with the at least one battery cell 100 interposed therebetween. The fire extinguishing agent injection unit 500 may be provided in plurality and disposed at each leakage prevention pocket 400.

Each of the plurality of fire extinguishing agent injection units 500 may include an injection unit body 510, an injection nozzle 530, and the fire extinguishing agent 550.

The injection unit body 510 contains the fire extinguishing agent 550 and may be provided outside the module case 200. The injection unit body 510 may be connected to a fire extinguishing agent supply unit (not shown) for supplying the fire extinguishing agent 550.

The injection nozzle 530 is connected to the injection unit body 510 and may pass through at least one of the plurality of leakage prevention pockets 400. The injection nozzle 530 is disposed to face the at least one battery cell 100 within the space 450 of the plurality of leakage prevention pockets 400, and in the event of an abnormal situation, may inject the fire extinguishing agent 550 toward the at least one battery cell 100.

The fire extinguishing agent 550 may include a liquid or gaseous material capable of extinguishing a fire, such as a fire extinguishing liquid or a fire extinguishing gas. The present disclosure is not limited thereto, and the fire extinguishing agent 550 may be provided as other types of materials capable of extinguishing fire or the like, or a mixture of these materials, of course.

Hereinafter, a thermal runaway prevention mechanism when an abnormal situation occurs in the battery module 10 according to this embodiment will be described in more detail.

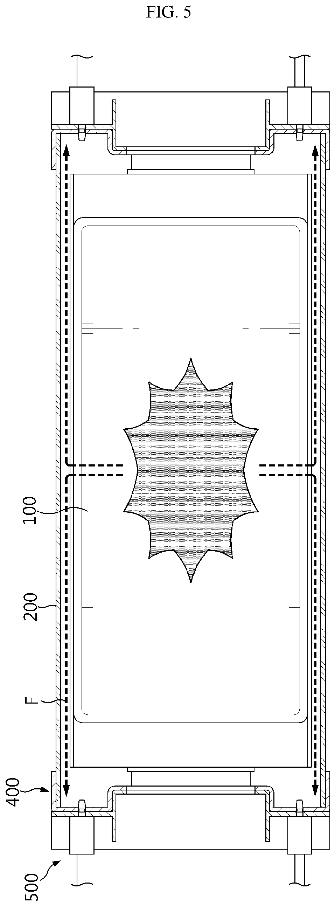

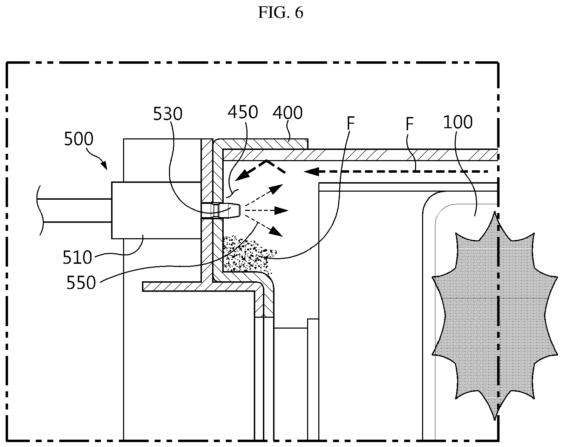

FIGS. 5 and 6 are diagrams for explaining a thermal runaway prevention mechanism of the battery module of FIG. 1 when an abnormal situation occurs.

Referring to FIGS. 5 and 6, in at least one of the battery cells 100 of the battery module 10, a dangerous situation that may lead to a fire or the like may occur due to overheating caused by an abnormal situation.

A flame or spark F generated in the battery cell 100 in which the abnormal situation occurs within the module case 200 of the battery module 10 is blocked by the leakage prevention pocket 400, so that leakage out of the module case 200 may be prevented. That is, the leakage prevention pocket 400 may suppress dangerous situations such as thermal runaway or fire by blocking the flame or spark F from oxygen outside the module case 200.

In addition, particles or residue generated from the flame or spark F may be deposited in the space 450 of the leakage prevention pocket 400 and accumulated in the space 450 without escaping to the outside of the module case 200. That is, the leakage prevention pocket 400 may suppress thermal runaway and fire in a passive manner.

In this case, the fire extinguishing agent injection unit 500 having the injection nozzle 530 disposed within the leakage prevention pocket 400 may inject the fire extinguishing agent 550 through the injection nozzle 530. That is, the fire extinguishing agent injection unit 500 may suppress thermal runaway and fire in an active manner.

As such, the battery module 10 according to this embodiment may suppress thermal runaway or fire in both the passive manner and the active manner through the leakage prevention pocket 400 and the fire extinguishing agent injection unit 500 in the event of an abnormal situation, so it is possible to significantly reduce the risk of thermal runaway or fire that can be caused in the event of an abnormal situation of the battery module 10.

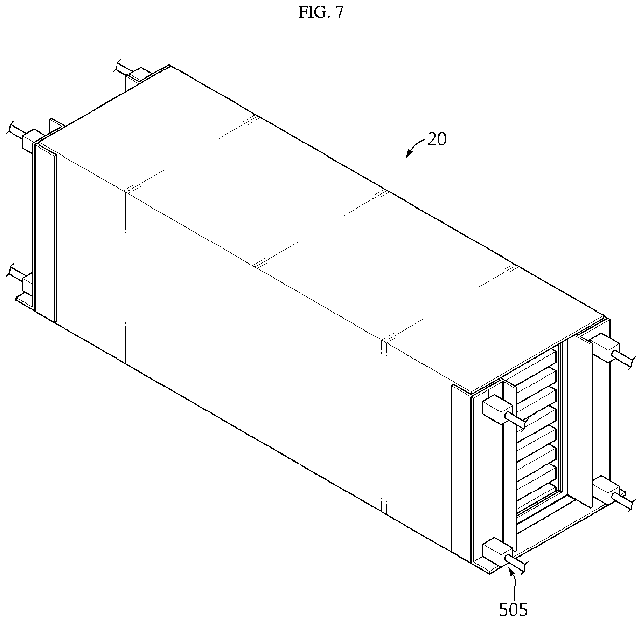

FIG. 7 is a diagram for explaining a battery module according to another embodiment of the present disclosure.

Referring to FIG. 7, the battery module 20 may include a plurality of fire extinguishing agent injection units 505. The plurality of fire extinguishing agent injection units 505 are provided to the front and rear parts of the battery module 20, respectively, and may be provided at four corners of the front rim and four corners of the rear rim.

As such, the location and number of the fire extinguishing agent injection units 505 may be appropriately set in consideration of the capacity of the battery module 20 or the shape of the case so as to minimize thermal runaway of the battery module 20.

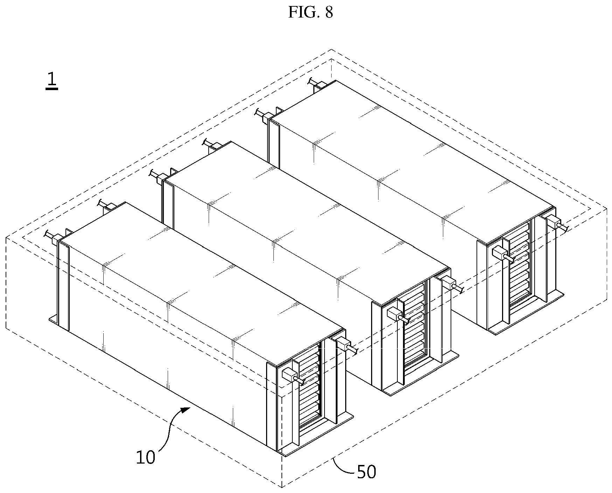

FIG. 8 is a diagram for explaining a battery pack according to an embodiment of the present disclosure.

Referring to FIG. 8, a battery pack 1 may include at least one or a plurality of battery modules 10 of the previous embodiment and a pack case 50 for accommodating the at least one or plurality of battery modules 10.

At least one or more battery packs 1 may be provided as an energy source of an energy storage system or a vehicle. In addition, it is also possible that the battery pack 1 is provided in other devices, instruments, and facilities using a secondary battery, in addition to the energy storage system or the vehicle.

As such, devices, the instruments and equipment including the battery pack 1 such as an energy storage system or a vehicle including the battery pack 1 according to the present embodiment may implement devices, instruments, facilities, or the like such as an energy storage system or a vehicle having all the advantages by the battery module 10 described above.

According to various embodiments as described above, there may be provided a battery module 10, 20 capable of preventing thermal runaway when an abnormal situation occurs in a battery cell 100, a battery pack 1 including the battery module 10, 20, and an energy storage system and a vehicle including the battery pack 1.

While the preferred embodiments of the present disclosure have been shown and described, the present disclosure is not limited to the specific embodiments described above, various modifications may be made by one of ordinary skill in the art to which the present disclosure pertains without departing from the gist of the present disclosure as defined by the claims, and these modifications should not be individually understood from the technical feature or prospect of the present disclosure.

## Claims

1. A battery module, comprising:
at least one battery cell;
a module case accommodating the at least one battery cell;
at least one leakage prevention pocket provided in the module case to prevent leakage of flame or spark in case of an abnormal situation of the at least one battery cell; and
a fire extinguishing agent injection unit provided to the at least one leakage prevention pocket and configured to inject a fire extinguishing agent into the module case in the event of the abnormal situation.

2. The battery module according to claim 1, wherein the leakage prevention pocket is provided in plurality, and
wherein the plurality of leakage prevention pockets are disposed with the at least one battery cell interposed therebetween.

3. The battery module according to claim 2, wherein the plurality of leakage prevention pockets are provided on edge portions of both sides of the module case.

4. The battery module according to claim 2, wherein the plurality of leakage prevention pockets have a predetermined space capable of accommodating the flame or spark.

5. The battery module according to claim 2, wherein the plurality of leakage prevention pockets are provided in a direction facing the moving direction of the flame or spark in the event of the abnormal situation.

6. The battery module according to claim 2, wherein the fire extinguishing agent injection unit is provided to at least one of the plurality of leakage prevention pockets.

7. The battery module according to claim 6, wherein the fire extinguishing agent injection unit is provided to pass through at least one of the plurality of leakage prevention pockets.

8. The battery module according to claim 6, wherein the fire extinguishing agent injection unit includes:
an injection unit body containing the fire extinguishing agent and provided outside the module case; and
an injection nozzle connected to the injection unit body and configured to pass through at least one of the plurality of leakage prevention pockets.

9. The battery module according to claim 8, wherein the injection nozzle is disposed to face the at least one battery cell within the plurality of leakage prevention pockets and is configured to inject the fire extinguishing agent toward the at least one battery cell in the event of the abnormal situation.

10. The battery module according to claim 6, wherein the fire extinguishing agent injection unit is provided in plurality, and
wherein the plurality of fire extinguishing agent injection units are disposed to face each other with the at least one battery cell interposed therebetween.

11. The battery module according to claim 1, wherein the fire extinguishing agent is provided as a fire extinguishing liquid or a fire extinguishing gas.

12. A battery pack, comprising:
at least one battery module according to claim 1; and
a pack case accommodating the at least one battery module.

13. An energy storage system, comprising at least one battery pack according to claim 12.

14. A vehicle, comprising at least one battery pack according to claim 12.
